# EUROPEAN PATENT APPLICATION

(11) **EP 4 700 810 A1**
(43) Date of publication of application: **25.02.2026**
(21) Application number: 24883579.5
(22) Date of filing: 02.07.2024
(51) Int. Cl.: H01G 4/30

(54) **MULTILAYER CERAMIC CAPACITOR**

(71) Applicant: MURATA MANUFACTURING CO., LTD., Nagaokakyo-shi, Kyoto 617-8555 (JP)
(72) Inventor: OYAMA, Daisuke, Nagaokakyo-shi, Kyoto 617-8555 (JP); NAKAHIRO, Hisashi, Nagaokakyo-shi, Kyoto 617-8555 (JP)
(74) Representative: Stöckeler, Ferdinand
(86) International application number: PCT/JP2024/023884
(87) International publication number: WO 2026/009305

(57) **Abstract**

Provided are multilayer ceramic capacitors that are each able to reduce or prevent the occurrence of cracks. A first external electrode 3A includes a first base electrode layer 31A of the first external electrode connected to first internal electrodes 15A and provided from a fifth surface F5 to a first surface F1, a second base electrode layer 32A of the first external electrode connected to the first internal electrode 15A and provided from a sixth surface F6 to the first surface F1, a first resin electrode layer 34A provided over the first base electrode layer 31A of the first external electrode, the first surface F1, and the second base electrode layer 32A of the first external electrode, and a first plated layer 36A provided on the first resin electrode layer 34A. The first surface F1 includes a first region 21 which is a region between a region where the first base electrode layer 31A of the first external electrode is provided and a region where the second base electrode layer 32A of the first external electrode is provided, and which is a region where the first resin electrode layer 34A is provided. The first region 21 overlaps, in the lamination direction T, with a middle portion of a multilayer body 2 in a second direction W.

## Description

### TECHNICAL FIELD

The present invention relates to a multilayer ceramic capacitor.

### BACKGROUND ART

In the prior art, a three-terminal multilayer ceramic capacitor has been known in which a third external electrode is provided on a lateral surface of a multilayer body in addition to a first external electrode and a second external electrode provided on both end portions of the multilayer body in a length direction (refer to Japanese Unexamined Patent Application, Publication No. 2022-031965).

### Citation List

### Patent Document

Patent Document 1: Japanese Unexamined Patent Application, Publication No. 2022-031965

### DISCLOSURE OF THE INVENTION

### Problems to be Solved by the Invention

The multilayer ceramic capacitor is mounted on a substrate by, for example, soldering. When the substrate on which the multilayer ceramic capacitor is mounted is bent, stress caused by the bending of the substrate may be transmitted to the multilayer body through the solder and the external electrode, and cracks may be generated in the multilayer body. If the cracks reach the interior of the multilayer body, a problem such as a short circuit may occur in the multilayer ceramic capacitor.

In addition, in the case of a three-terminal multilayer ceramic capacitor, cracks are likely to occur at a portion where an end portion of each of external electrodes opposed to each other in the longitudinal direction of the multilayer body and the multilayer body are in contact with each other.

An embodiment of the present invention provides multilayer ceramic capacitors that are each able to reduce or prevent the occurrence of cracks.

### Means for Solving the Problems

To solve the above-mentioned problem, an embodiment of the present invention provides a multilayer ceramic capacitor which includes: a multilayer body including an inner layer portion including a plurality of dielectric layers and a plurality of internal electrodes alternately laminated, a first surface and a second surface opposed to each other in a lamination direction, a third surface and a fourth surface opposed to each other in a first direction orthogonal or substantially orthogonal to the lamination direction, and a fifth surface and a sixth surface opposed to each other in a second direction orthogonal or substantially orthogonal to the lamination direction and the first direction; and a plurality of external electrodes provided on an outer surface of the multilayer body. The plurality of internal electrodes include at least one first internal electrode which extends toward and is exposed at the fifth surface and the sixth surface, and at least one second internal electrode which is opposed to the first internal electrode and extends toward and is exposed at the fifth surface,
the plurality of external electrodes includes a first external electrode which is connected to the first internal electrode and provided from the third surface to the first surface, the fifth surface, and the sixth surface, a second external electrode which is connected to the first internal electrode and provided from the fourth surface to the first surface, the fifth surface, and the sixth surface, and a third external electrode which is connected to the second internal electrode and provided from the fifth surface to the first surface, the first external electrode includes a first base electrode layer of the first external electrode which is connected to the first internal electrode and provided from the fifth surface to the first surface, a second base electrode layer of the first external electrode which is connected to the first internal electrode and provided from the sixth surface to the first surface, and a first resin electrode layer provided over the first base electrode layer of the first external electrode, the first surface, and the second base electrode layer of the first external electrode; and a first plated layer provided over the first resin electrode layer. The first surface includes a first region which is a region between a region in which the first base electrode layer of the first external electrode is provided and a region in which the second base electrode layer of the first external electrode is provided, and which is a region in which the first resin electrode layer is provided. The first region overlaps, in the lamination direction, with a middle portion of the multilayer body in the second direction.

### Effects of the Invention

According to an embodiment of the present invention, it is possible to provide multilayer ceramic capacitors that are each able to reduce or prevent the occurrence of cracks.

### BRIEF DESCRIPTION OF THE DRAWINGS

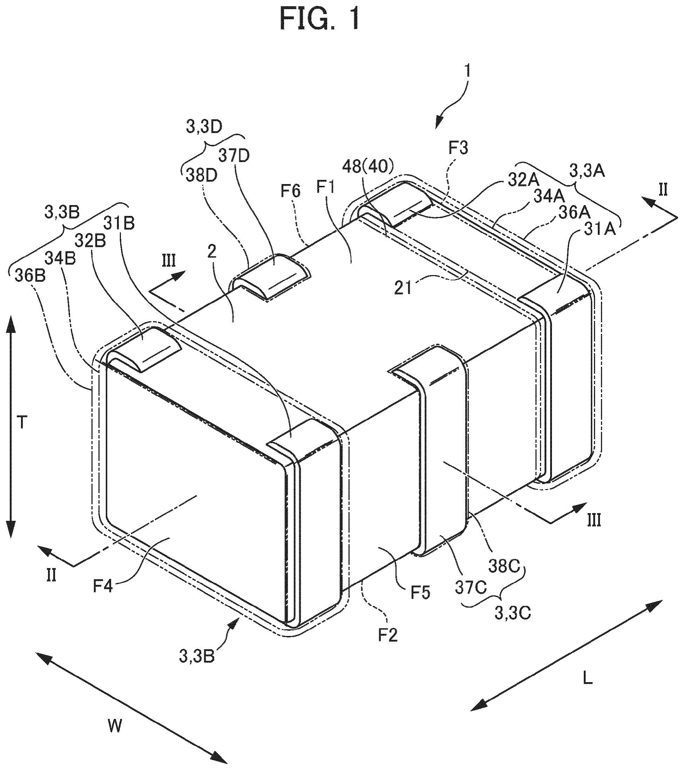

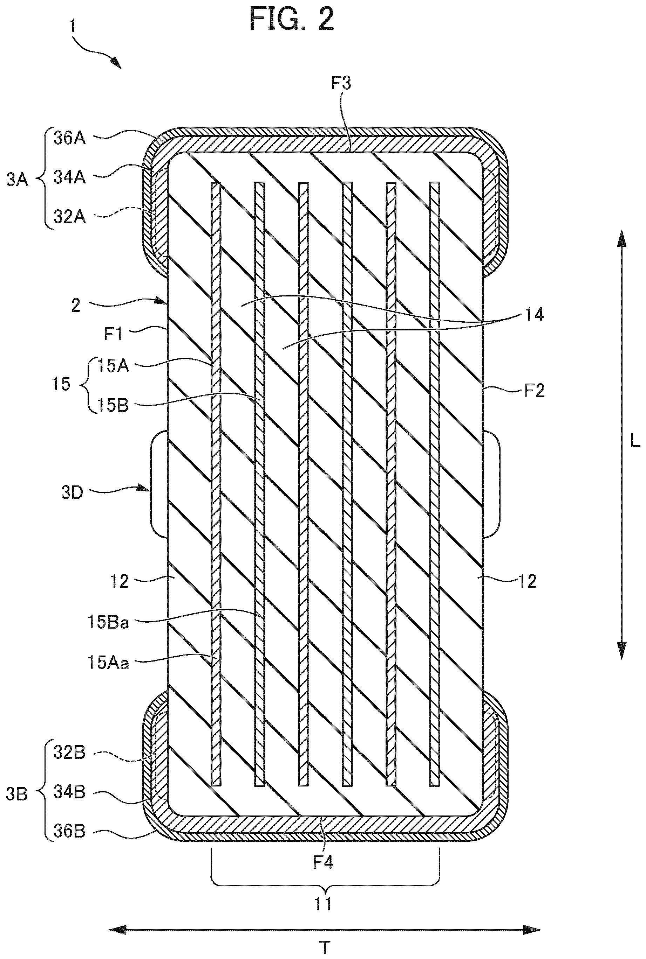

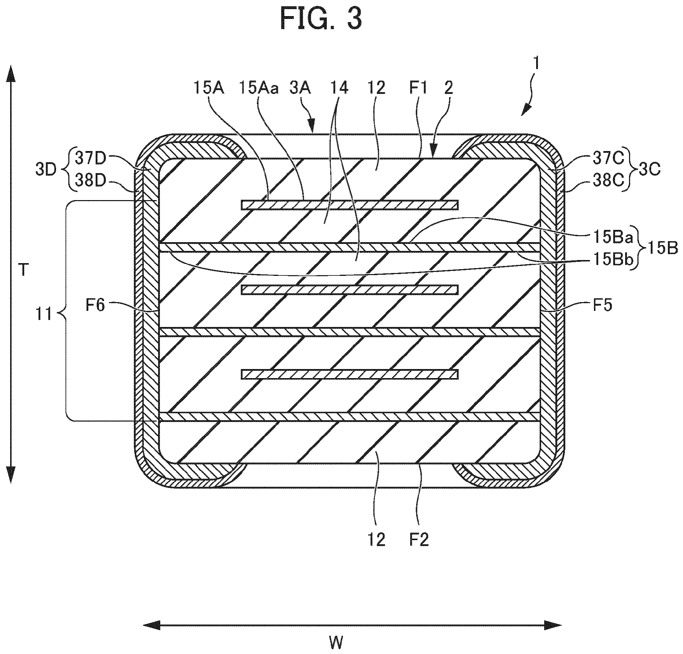

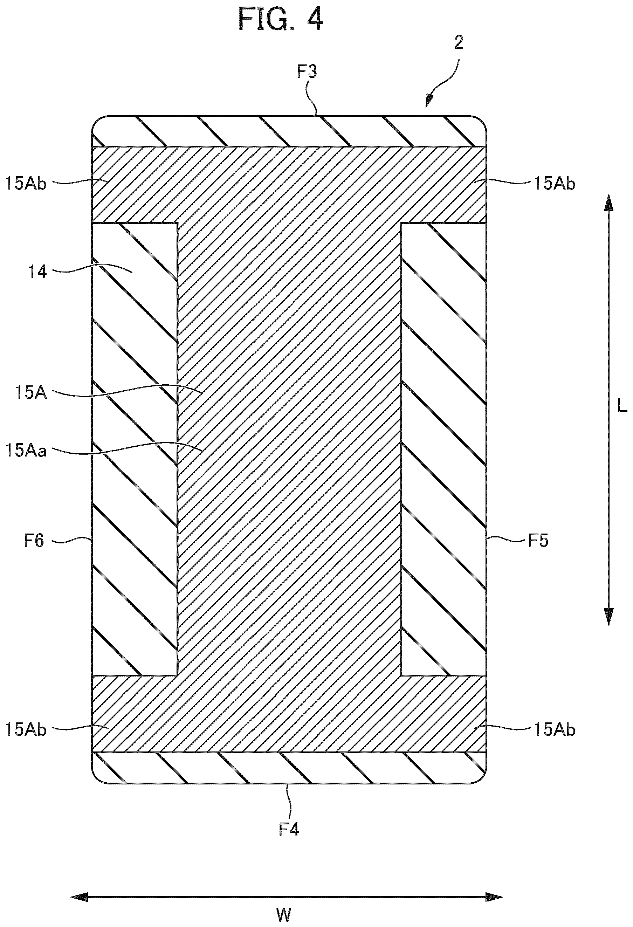

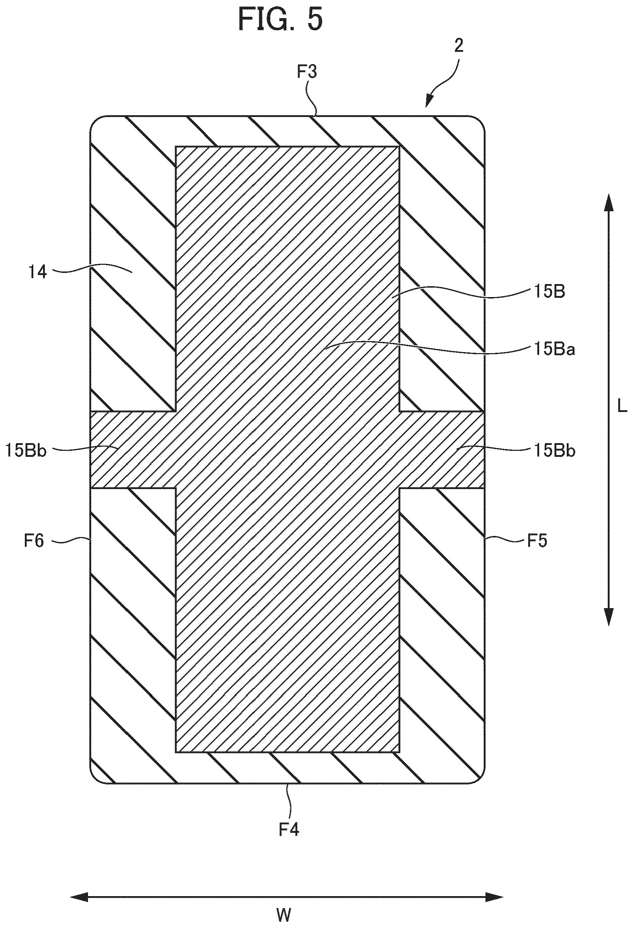

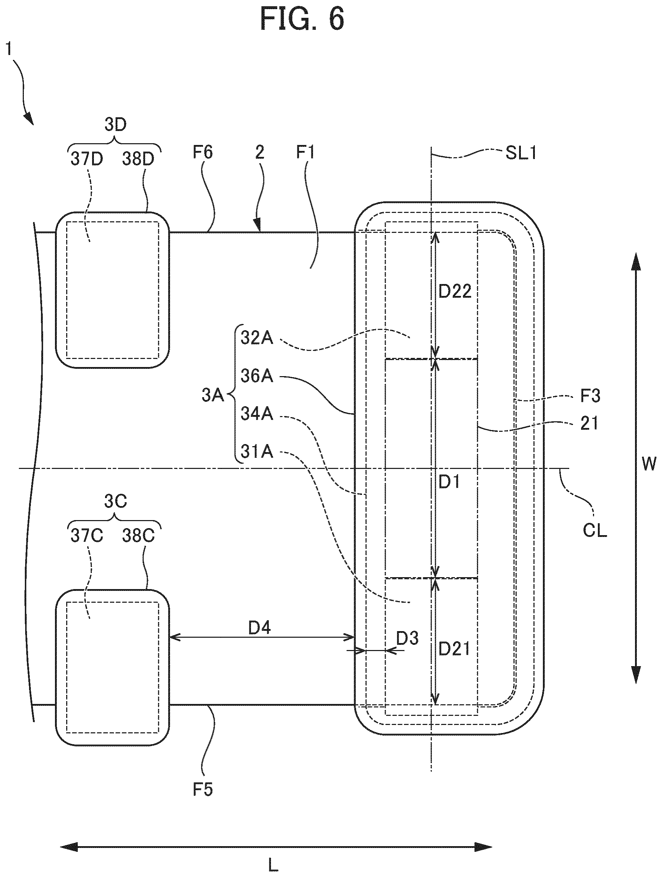

FIG. 1 is a schematic perspective view of a multilayer ceramic capacitor according to an embodiment. FIG. 2 is a cross-sectional view taken along the line II-II of FIG. 1. FIG. 3 is a cross-sectional view taken along the line III-III of FIG. 1. FIG. 4 is a cross-sectional view taken along a first internal electrode of the multilayer body. FIG. 5 is a cross-sectional view along a second internal electrode of the multilayer body. FIG. 6 is a plan view of a portion near a third surface of a multilayer ceramic capacitor as viewed from a first surface side.

### PREFERRED MODE FOR CARRYING OUT THE INVENTION

Hereinafter, a multilayer ceramic capacitor 1 according to an embodiment of the present invention will be described with reference to FIGS. 1 to 6.

### Multilayer Ceramic Capacitor 1

As shown in FIG. 1, the multilayer ceramic capacitor 1 is a so-called three-terminal multilayer ceramic capacitor. The multilayer ceramic capacitor 1 includes a multilayer body 2 and external electrodes 3 provided on an outer surface of the multilayer body 2. The multilayer body 2 has a substantially rectangular parallelepiped shape and has six outer surfaces. As shown in FIGS. 2 and 3, the multilayer body 2 includes an inner layer portion 11 in which dielectric layers 14 and internal electrodes 15 are laminated.

In the present specification, in the multilayer ceramic capacitor 1, a direction in which the dielectric layers 14 and the internal electrodes 15 are stacked or laminated is defined as a stacking or lamination direction T. One of the directions orthogonal or substantially orthogonal to the lamination direction T is defined as a first direction L. A direction orthogonal or substantially orthogonal to the first direction L and the lamination direction T is defined as a second direction W.

Among the six outer surfaces of the multilayer body 2, a pair of outer surfaces provided on both sides in the lamination direction T is defined as a first surface F1 and a second surface F2, a pair of outer surfaces extending in the lamination direction T and provided on both sides in the first direction L is defined as a third surface F3 and a fourth surface F4, and a pair of outer surfaces extending in the lamination direction T and provided on both sides in the second direction W is defined as a fifth surface F5 and a sixth surface F6.

### Multilayer Body 2

The multilayer body 2 includes an inner layer portion 11 and a pair of outer layer portions 12 sandwiching the inner layer portion 11 in the lamination direction T. Portions of the multilayer body 2 where the three outer surfaces intersect with one another are each defined as a "corner portion". Portions of the multilayer body 2 where two outer surfaces intersect with each other are each defined as a "ridge portion". The corner portions and the ridge portions of the multilayer body 2 are preferably rounded.

The outer dimensions of the multilayer body are, for example, 0.3 mm or more and 5.0 mm or less in the lamination direction T, 0.6 mm or more and 5.7 mm or less in the first direction L, and 0.3 mm or more and 5.0 mm or less in the second direction W. The dimension of the multilayer body 2 in the first direction L is, for example, equal to or larger than the dimension of the multilayer body 2 in the second direction W. The outer dimensions of the multilayer ceramic capacitor 1 can be measured by a micrometer.

### Inner Layer Portion 11

As illustrated in FIGS. 2 and 3, the inner layer portion 11 includes a plurality of dielectric layers 14 and a plurality of internal electrodes 15.

### Dielectric Layer 14

Each of the dielectric layers 14 is made of, for example, a dielectric ceramic containing BaTiO₃ as a main component. The dielectric ceramic may contain a Mn compound, a Fe compound, a Cr compound, a Co compound, a Ni compound, or the like as a subcomponent.

### Internal Electrode 15

Each of the internal electrodes 15 is made of a metal material such as Ni, Cu, Ag, Pd, an Ag-Pd alloy, or Au. Each of the internal electrodes 15 preferably contains Cu, Ni, or a Cu-Ni alloy as a main component. In addition, Sn is preferably contained as an auxiliary component. When a Sn layer is formed at the interface between each of the internal electrodes 15 and each of the dielectric layers 14, the concentration of an electric field on the interface between each of the internal electrodes 15 and each of the dielectric layers 14 can be relaxed, and thus it is possible to improve reliability in a high-temperature environment.

The plurality of internal electrodes 15 includes a plurality of first internal electrodes 15A and a plurality of second internal electrodes 15B. The plurality of first internal electrodes 15A and the plurality of second internal electrodes 15B are alternately provided in the lamination direction T. The plurality of first internal electrodes 15A and the plurality of second internal electrodes 15B may be collectively referred to as "internal electrode 15". When the internal electrode 15 contains Sn, only one of the first internal electrode 15A or the second internal electrode 15B may contain Sn. In addition, the first internal electrodes 15A may be consecutively laminated, following which the second internal electrodes 15B may be provided between the first internal electrodes 15A. When the first internal electrodes 15A are consecutively provided, it is possible to reduce the resistance in the first internal electrodes 15A.

### First Internal Electrode 15A

As shown in FIG. 4, each of the first internal electrodes 15A extends toward and is exposed at the fifth surface F5 and the sixth surface F6. Each of the first internal electrodes 15A has, for example, a substantially H-shape when viewed in the lamination direction T. Each of the first internal electrodes 15A is spaced away from the third surface F3 and the fourth surface F4, respectively. Each of the first internal electrodes 15A includes a first counter portion 15Aa and a plurality of (for example, four) first extension portions 15Ab.

The first counter portion 15Aa is a portion of the first internal electrode 15A and opposed to the second internal electrode 15B adjacent in the lamination direction T. The first counter portion 15Aa is located at a middle portion between the third surface F3 and the fourth surface F4.

Each of the first extension portions 15Ab is a portion of the first internal electrode 15A, and extends toward and is exposed at the outer surface of the multilayer body 2. For example, the four first extension portions 15Ab include a first extension portion 15Ab that extends toward and is exposed at a portion of the fifth surface F5 adjacent to the third surface F3, a first extension portion 15Ab that extends toward and is exposed at a portion of the fifth surface F5 adjacent to the fourth surface F4, a first extension portion 15Ab that extends toward and is exposed at a portion of the sixth surface F6 adjacent to the third surface F3, and a first extension portion 15Ab that extends toward and is exposed at a portion of the sixth surface F6 adjacent to the fourth surface F4.

### Second Internal Electrode 15B

As shown in FIG. 5, each of the second internal electrodes 15B extends toward and is exposed at the fifth surface F5, and more specifically, extends toward and is exposed at the fifth surface F5 and the sixth surface F6, respectively. Each of the second internal electrodes 15B has, for example, a substantially cross shape. Each of the second internal electrodes 15B is spaced away from the third surface F3 and the fourth surface F4, respectively. Each of the second internal electrodes 15B has a second counter portion 15Ba and a plurality of (for example, two) second extension portions 15Bb.

The second counter portion 15Ba is a portion of the second internal electrode 15B opposed to the first internal electrode 15A adjacent in the lamination direction T. The second counter portion 15Ba is located at a middle portion between respective lateral surface B.

Each of the second extension portions 15Bb is a portion of the first internal electrode 15A that extends toward and is exposed at the outer surface of the multilayer body 2. For example, the two second extension portions 15Bb include a second extension portion 15Bb that extends toward and is exposed at the middle portion of the fifth surface F5 in the first direction L and a second extension portion 15Bb that extends toward and is exposed at the middle portion of the sixth surface F6 in the first direction L.

The first counter portion 15Aa and the second counter portion 15Ba may be collectively referred to as "counter portion 15a". The first extension portion 15Ab and the second extension portion 15Bb may be collectively referred to as "extension portion 15b".

### External Electrode 3

The external electrodes 3 include: a first external electrode 3A connected to the first internal electrodes 15A and provided from the third surface F3 to the first surface F1, the fifth surface F5, and the sixth surface F6; a second external electrode 3B connected to the first internal electrodes 15A and provided from the fourth surface F4 to the first surface F1, the fifth surface F5, and the sixth surface F6; a third external electrode 3C connected to the second internal electrodes 15B and provided from the fifth surface F5 to the first surface F1; and a fourth external electrode 3D connected to the second internal electrodes 15B and provided from the sixth surface F6 to the first surface F1.

### First External Electrode 3A

The first external electrode 3A is preferably provided from the third surface F3 to the first surface F1, the second surface F2, the fifth surface F5, and the sixth surface F6.

The first external electrode 3A includes a first base electrode layer 31A of the first external electrode connected to the first internal electrodes 15A and provided from the fifth surface F5 to the first surface F1, a second base electrode layer 32A of the first external electrode connected to the first internal electrodes 15A and provided from the sixth surface F6 to the first surface F1, a first resin electrode layer 34A provided over the first base electrode layer 31A of the first external electrode, the first surface F1, and the second base electrode layer 32A of the first external electrode, and a first plated layer 36A provided on the first resin electrode layer 34A.

The first base electrode layer 31A of the first external electrode is preferably provided from the fifth surface F5 to the first surface F1 and the second surface F2. The first base electrode layer 31A of the first external electrode preferably covers the fifth surface F5, the ridge portion between the fifth surface F5 and the first surface F1, and the ridge portion between the fifth surface F5 and the second surface F2. Further, the first base electrode layer 31A of the first external electrode preferably also extends on the first surface F1 and the second surface F2.

The second base electrode layer 32A of the first external electrode is preferably provided from the sixth surface F6 to the first surface F1 and the second surface F2. The second base electrode layer 32A of the first external electrode preferably covers the sixth surface F6, the ridge portion between the sixth surface F6 and the first surface F1, and the ridge portion between the sixth surface F6 and the second surface F2. Further, the second base electrode layer 32A of the first external electrode preferably also extends on the first surface F1 and the second surface F2.

The first base electrode layer 31A of the first external electrode and the second base electrode layer 32A of the first external electrode are, for example, fired layers including an electrically conductive metal and glass. The electrically conductive metal is, for example, a metal such as Ni (nickel), Cu (copper), Ag (silver), Pd (palladium), Au (gold), or an Ag-Pd alloy, and is preferably Cu.

The first base electrode layer 31A of the first external electrode is connected to the first extension portions 15Ab that each extend toward and are exposed at the portion of the fifth surface F5 adjacent to the third surface F3. The second base electrode layer 32A of the first external electrode is connected to the first extension portions 15Ab that each extend toward and are exposed at the portion of the sixth surface F6 adjacent to the third surface F3. In other words, the first external electrode 3A is connected to the first extension portions 15Ab that each extend toward and are exposed at the portion of the fifth surface F5 adjacent to the third surface F3 and the first extension portions 15Ab that each extend toward and are exposed at the portion of the sixth surface F6 adjacent to the third surface F3. On the first surface F1, the first base electrode layer 31A of the first external electrode and the second base electrode layer 32A of the first external electrode are provided at an interval in the second direction W, and specifically, opposed to each other in the second direction W. On the second surface F2, the first base electrode layer 31A of the first external electrode and the second base electrode layer 32A of the first external electrode are provided at an interval in the second direction W, and specifically, opposed to each other in the second direction W.

The first resin electrode layer 34A is preferably provided over the first base electrode layer 31A of the first external electrode, the first surface F1, the second base electrode layer 32A of the first external electrode, the second surface F2, and the third surface F3.

The first resin electrode layer 34A includes a thermosetting resin and a metal component.

The thermosetting resin may include at least one selected from various known thermosetting resins such as an epoxy resin, a phenoxy resin, a phenol resin, a urethane resin, a silicone resin, and a polyimide resin. Among them, an epoxy resin excellent in heat resistance, moisture resistance, adhesion, and the like is one of the most suitable resins.

Since the first resin electrode layer 34A includes such a thermosetting resin, it is more flexible than an electrically conductive layer made of, for example, a plated film or a fired product of an electrically conductive paste. Therefore, the first resin electrode layer 34A functions as a buffer layer even when a physical impact or shock due to thermal cycling is applied to the multilayer ceramic capacitor 1. Therefore, it is possible for the first resin electrode layer 34A to reduce or prevent the occurrence of cracks in the multilayer ceramic capacitor 1.

The first resin electrode layer 34A preferably includes a curing agent together with a thermosetting resin. When an epoxy resin is used as the base resin, the curing agent of the epoxy resin may be various known compounds such as phenolic, amine-based, acid anhydride-based, imidazole-based, active ester-based, and amideimide-based compounds.

The metal component may be Au, Ag, Cu, Ni, Sn, Bi, Zn, or an alloy containing them. The metal component preferably includes Ag. The metal component is, for example, a metal powder of Ag. Since Ag has the lowest specific resistance among metals, Ag is suitable as an electrode material. Since Ag is a noble metal, Ag is less likely to be oxidized and has high weather resistance. Therefore, a metal powder of Ag is suitable as the metal component of the first resin electrode layer 34A.

The metal component may be a metal powder in which the surface of the metal powder is coated with Ag. When an Ag-coated metal powder is used, the metal powder is preferably a base metal such as Cu, Ni, Sn, or Bi or an alloy powder thereof, and more preferably Cu. The metal of the base material can be made inexpensive while maintaining the characteristics of Ag.

The first plated layer 36A is provided, for example, over the entire area of the first resin electrode layer 34A. The first plated layer 36A is made of, for example, at least one metal selected from the group including Ni, Cu, Ag, Pd, Au, and Sn, or an alloy containing the metal. Although not shown, the first plated layer 36A includes, for example, a Ni plated layer provided on the first resin electrode layer 34A and a Sn plated layer provided on the Ni plated layer. However, the configuration of the first plated layer 36A is not limited thereto, and may be, for example, a single-layer structure.

### Second External Electrode 3B

The second external electrode 3B is preferably provided from the fourth surface F4 to the first surface F1, the second surface F2, the fifth surface F5, and the sixth surface F6.

The second external electrode 3B includes the first base electrode layer 31B of the second external electrode connected to the first internal electrodes 15A and provided from the fifth surface F5 to the first surface F1, the second base electrode layer 32B of the second external electrode connected to the first internal electrodes 15A and provided from the sixth surface F6 to the first surface F1, the second resin electrode layer 34B provided over the first base electrode layer 31B of the second external electrode, the first surface F1, and the second base electrode layer 32B of the second external electrode, and the second plated layer 36B provided on the second resin electrode layer 34B.

The multilayer ceramic capacitor 1 has a substantially symmetrical structure in the first direction L. The configuration of the second external electrode 3B and the peripheral configuration thereof substantially correspond to the configuration of the first external electrode 3A and the peripheral configuration thereof. The configuration of the first base electrode layer 31B of the second external electrode corresponds to the configuration of the first base electrode layer 31A of the first external electrode, the configuration of the second base electrode layer 32B of the second external electrode corresponds to the configuration of the second base electrode layer 32A of the first external electrode, the configuration of the second resin electrode layer 34B corresponds to the configuration of the first resin electrode layer 34A, and the configuration of the second plated layer 36B corresponds to the configuration of the first plated layer 36A. Therefore, a detailed description of the configuration of the second external electrode 3B and the peripheral configuration thereof will be omitted.

### Third External Electrode 3C

The third external electrode 3C is preferably provided from the fifth surface F5 to the first surface F1 and the second surface F2.

The third external electrode 3C includes a third base electrode layer 37C connected to the second internal electrodes 15B and provided from the fifth surface F5 to the first surface F1, and a third plated layer 38C.

The third base electrode layer 37C is preferably provided from the fifth surface F5 to the first surface F1 and the second surface F2.

The third base electrode layer 37C is, for example, a fired layer including an electrically conductive metal and glass. The electrically conductive metal is, for example, a metal such as Ni, Cu, Ag, Pd, Au, or an Ag-Pd alloy, and is preferably Cu.

The third base electrode layer 37C is connected to the first extension portions 15Ab that each extend toward and are exposed at the middle portion of the fifth surface F5 in the first direction L. In other words, the third external electrode 3C is connected to the second extension portions 15Bb that each extend toward and are exposed at the middle portion of the fifth surface F5 in the first direction L.

The third plated layer 38C is provided on the third base electrode layer 37C. The third plated layer 38C is made of, for example, at least one metal selected from the group including Ni, Cu, Ag, Pd, Au, and Sn, or an alloy containing the metal. Although not illustrated, the third plated layer 38C includes, for example, a Ni plated layer provided on the third base electrode layer 37C and a Sn plated layer provided on the Ni plated layer. However, the configuration of the third plated layer 38C is not limited thereto, and may be, for example, a single-layer structure.

### Fourth External Electrode 3D

The fourth external electrode 3D is preferably provided from the sixth surface F6 to the first surface F1 and the second surface F2.

The fourth external electrode 3D includes a fourth base electrode layer 37D connected to the second internal electrodes 15B and provided from the sixth surface F6 to the first surface F1, and a fourth plated layer 38D.

The multilayer ceramic capacitor 1 has a substantially symmetrical structure in the second direction W. The configuration of the fourth external electrode 3D and the peripheral configuration thereof substantially correspond to the configuration of the third external electrode 3C and the peripheral configuration thereof. The configuration of the fourth base electrode layer 37D corresponds to the configuration of the third base electrode layer 37C, and the configuration of the fourth plated layer 38D corresponds to the configuration of the third plated layer 38C. Therefore, detailed descriptions of the configuration of the fourth external electrode 3D and the peripheral configuration thereof will be omitted.

The first base electrode layer 31A of the first external electrode, the second base electrode layer 32A of the first external electrode, the third base electrode layer 37C, and the fourth base electrode layer 37D may be collectively referred to as "base electrode layers 31, 32, and 37". The first plated layer 36A, the second plated layer 36B, the third plated layer 38C, and the fourth plated layer 38D may be collectively referred to as "plated layers 36 and 38".

As shown in FIG. 6, the first surface F1 includes a first region 21 which is a region sandwiched between a region in which the first base electrode layer 31A of the first external electrode is provided and a region in which the second base electrode layer 32A of the first external electrode is provided, and which is a region in which the first resin electrode layer 34A is provided. In the first surface F1, the region sandwiched between the region in which the first base electrode layer 31A of the first external electrode is provided and the region in which the second base electrode layer 32A of the first external electrode is provided is, for example, defined as the first region 21 over the entire region.

The first region 21 includes a middle position in the second direction W of the multilayer body 2. The first base electrode layer 31A of the first external electrode and the second base electrode layer 32A of the first external electrode are spaced away from each other, for example, from a position overlapping, in the lamination direction T, with a middle position in the second direction W of the multilayer body 2.

In addition, the "middle position in the second direction W of the multilayer body 2" refers to a position of the multilayer body 2 overlapping with a middle line CL in the lamination direction T, when a straight line (referred to as the middle line CL) parallel to the first direction L passing through the middle portion of the third surface F3 in the second direction W in a plan view of the multilayer body 2 in the lamination direction T is drawn.

The dimension of the first region 21 in the second direction W is one third or more of the dimension of the multilayer body 2 in the second direction W. The separation distance in the second direction W between the first base electrode layer 31A of the first external electrode and the second base electrode layer 32A of the first external electrode is one third or more of the dimension in the second direction W of the multilayer body 2.

A dimension in the second direction W of a portion of the first base electrode layer 31A of the first external electrode provided on the first surface F1 is 10 µm or more. A dimension in the second direction W of a portion of the second base electrode layer 32A of the first external electrode provided on the first surface F1 is 10 µm or more.

The distance in the first direction L from the tip of the first base electrode layer 31A of the first external electrode in the first direction L to the periphery of the first resin electrode layer 34A is 5 µm or more.

The shortest distance (distance D4) between the first plated layer 36A and the third plated layer 38C is 100 µm or more.

The multilayer ceramic capacitor 1 has a substantially symmetrical configuration in the lamination direction T. Therefore, the configuration of the second surface F2 and the configuration of the periphery of the second surface F2 substantially correspond to the configuration of the first surface F1 and the configuration of the periphery of the first surface F1. Detailed descriptions of the configuration of the second surface F2 and the configuration around the second surface F2 will be omitted.

### Measuring Method of Dimension and Distance

The dimension D1, the dimension D21, the dimension D22, the distance D3, and the distance D4 are measured by a microscope. The magnification during the measurement is about 50 times to about 100 times.

When the dimension D1, the dimension D21, the dimension D22, and the distance D3 are measured, the first resin electrode layer 34A, the first base electrode layer 31A of the first external electrode, and the second base electrode layer 32A of the first external electrode are appropriately exposed. The first resin electrode layer 34A, the first base electrode layer 31A of the first external electrode, and the second base electrode layer 32A of the first external electrode are exposed by, for example, polishing.

A virtual straight line including a line segment parallel to the second direction W connecting the first base electrode layer 31A of the first external electrode and the second base electrode layer 32A of the first external electrode at the shortest distance is referred to as a "reference line SL1". The dimension D1, the dimension D21, and the dimension D22 are measured on the reference line SL1.

Manufacturing Method of Multilayer Ceramic Capacitor 1 Next, a method of manufacturing the multilayer ceramic capacitor 1 according to the embodiment will be described. The method of forming the second external electrode 3B corresponds to the method of forming the first external electrode 3A, and the method of forming the fourth external electrode 3D corresponds to the method of forming the third external electrode 3C. Therefore, descriptions of the method of forming the second external electrode 3B and the method of forming the fourth external electrode 3D will be omitted.

### Internal Electrode Pattern Forming Process

First, a ceramic green sheet in which a ceramic slurry is molded into a sheet shape is prepared. Next, the patterns of the first internal electrodes 15A and the second internal electrodes 15B are printed on the ceramic green sheets with an electrically conductive paste. Thus, the ceramic green sheet in which the first internal electrodes 15A are provided and the ceramic green sheet in which the second internal electrodes 15B are provided are obtained. The patterns of the first internal electrodes 15A and the second internal electrodes 15B are formed by, for example, printing such as screen printing, gravure printing, or relief printing.

### Lamination Process

Next, the ceramic green sheet on which the first internal electrodes 15A are provided and the ceramic green sheet on which the second internal electrodes 15B are provided are alternately laminated. Next, on both sides of the laminated ceramic green sheets in the lamination direction T, the ceramic green sheets for the outer layer portions functioning as the outer layer portion 12 are laminated. The ceramic green sheets for the outer layer portions are thermocompression-bonded to the ceramic green sheet. Thus, a mother block is obtained.

Each of the outer layer portions 12 may be formed by laminating a plurality of ceramic green sheets, or may include a single ceramic green sheet. The ceramic green sheet for manufacturing the inner layer portion and the ceramic green sheet for manufacturing the outer layer portion may contain different components.

### Mother Block Cutting Process

The mother block is then divided along cutting lines corresponding to the dimensions of the multilayer body. The mother block is cut, for example, in the first direction L and the second direction W. As a result, a plurality of rectangular parallelepiped blocks (referred to as "multilayer chips") are obtained. In addition, corner portions and ridge portions of each of the multilayer chips are preferably rounded, for example.

### Multilayer Body Firing Process

Next, the multilayer chips are each heated at a predetermined firing temperature in a nitrogen atmosphere for a predetermined period of time. Thus, the multilayer body 2 is obtained.

### Base Electrode Layer Forming Process

Next, an electrically conductive paste including copper and glass is applied onto the multilayer body 2. The electrically conductive paste functioning as the first base electrode layer 31A of the first external electrode and the electrically conductive paste functioning as the third base electrode layer 37C are respectively applied from the fifth surface F5 to the first surface F1 and the second surface F2, for example. The electrically conductive paste functioning as the second base electrode layer 32A of the first external electrode is, for example, connected to the first internal electrodes 15A and applied from the sixth surface F6 to the first surface F1 and the second surface F2.

### Base Electrode Layer Firing Process

Next, the multilayer body 2 on which the base electrode layers 31, 32, and 37 are provided is heated at a predetermined firing temperature for a predetermined period of time in a nitrogen atmosphere. As a result, the base electrode layers 31, 32, and 37 are fired on the multilayer body 2. In addition, the multilayer body firing process and the base electrode layer firing process may be performed simultaneously after the material of the base electrode layer 31 is provided on the multilayer chip.

### Resin Electrode Layer Forming Process

Next, an electrically conductive resin paste including an electrically conductive resin and a metal component is prepared as an electrically conductive resin paste to form the first resin electrode layer 34A. The electrically conductive resin paste is applied on the multilayer body 2 on which the base electrode layers 31, 32, and 37 are formed, and is applied, for example, over the first base electrode layer 31A of the first external electrode, the first surface F1, the second base electrode layer 32A of the first external electrode, the second surface F2, and the third surface F3. The coating method is, for example, a dipping method.

### Resin Electrode Layer Firing Process

Next, the multilayer body 2 coated with the electrically conductive resin paste is subjected to heat treatment. As the heat treatment, drying is performed in a hot air oven at 150°C or more and 180°C or less for 10 minutes. Thereafter, curing is performed in an air atmosphere at 200°C or more and 280°C or less for 60 minutes. The first resin electrode layer 34A is formed by this thermal curing.

### Plating Process

Next, the first plated layer 36A is formed on the first resin electrode layer 34A. For example, a Ni plated layer is formed on the first resin electrode layer 34A, and a Sn plated layer is formed on the Ni plated layer. A third plated layer is formed on the third base electrode layer 37C. For example, a Ni plated layer is formed on the first resin electrode layer 34A, and a Sn plated layer is formed on the Ni plated layer. The Ni plated layer and the Sn plated layer are sequentially formed by, for example, an electrolytic plating method.

With such a configuration, the multilayer ceramic capacitor 1 shown in FIG. 1 is obtained.

### Experimental Example

Multilayer ceramic capacitors were manufactured as samples of the Examples and Comparative Examples by the above-described manufacturing method. Using the obtained samples, a substrate bending test and a moisture resistance test were performed.

### 1. Production of Multilayer Ceramic Capacitors

As samples of the Examples, multilayer ceramic capacitors each including the same or substantially the same structure as the multilayer ceramic capacitor 1 described above (the configurations shown in FIGS. 1 to 6) were produced. The dimensions of each of the multilayer ceramic capacitors are L × W × T = 1.0 mm × 0.5 mm × 0.5 mm. The base electrode layers 31, 32, and 37 contain Cu as a main component and Si as a glass component. The first resin electrode layer 34A contains an epoxy resin as a thermosetting resin and Ag as a metal component. The first plated layer 36A has a two-layer configuration including a Ni plated layer and a Sn plated layer. The method of manufacturing the multilayer ceramic capacitors of the samples was the method of manufacturing the multilayer ceramic capacitors described in the description of the embodiment.

As the Examples, Experimental Examples 1 to 8 were established. Each Example varied in the dimension of the portion of the first base electrode layer 31A of the first external electrode provided on the first surface F1 in the second direction W (may be referred to as "W dimension of the first base electrode layer of the first external electrode") and the dimension of the portion of the second base electrode layer 32A of the first external electrode provided on the first surface F1 in the second direction W (may be referred to as "W dimension of the second base electrode layer of the first external electrode"). Each Example varied in the distance in the second direction W between the first base electrode layer 31A of the first external electrode and the second base electrode layer 32A of the first external electrode on the first surface F1 (in other words, the dimension of the first region 21 in the second direction W, or may be referred to as "W dimension of the first region"). In each of the respective Examples and the Comparative Example, the W dimension of the first base electrode layer of the first external electrode and the W dimension of the second base electrode layer of the first external electrode were the same.

From Example 1 to Example 8, the W dimension of the first base electrode layer of the first external electrode and the W dimension of the second base electrode layer of the first external electrode were reduced in a stepwise manner. From Example 1 to Example 8, the W dimension of the first region was increased in a stepwise manner. The W dimension of the first base electrode layer of the first external electrode and the W dimension of the second base electrode layer of the first external electrode, and the W dimension of the first region in each Example are shown in Table 1.

In each of Examples 1 to 4, the W dimension of the first region was set as a ratio to the dimension of the multilayer body in the second direction W (may be referred to as "W dimension of the multilayer body"). In each of Examples 5 to 8, the W dimension of the first region was set as an absolute value (µm) of the dimension.

Comparative Example 1 was set as a comparative example. As samples of Comparative Example 1, multilayer ceramic capacitors having substantially the same configuration as the samples of Experimental Example 1 were produced. However, the first resin electrode layer 34A was not provided but rather the base electrode layer was provided in each of the multilayer ceramic capacitors of the comparative example. Therefore, in the Comparative Example, the first plated layer 36A was provided directly on the first base electrode layer 31A of the first external electrode.

In Comparative Example 1, the first resin electrode layer 34A was not provided on the first surface F1. Therefore, in Comparative Example 1, the first surface F1 did not include the first region 21. Therefore, in Table 1, the W dimension of the first region of Comparative Example 1 was defined as "-".

### 2. Evaluation

Next, the prepared samples were evaluated by the following methods.

### Substrate Bending Test

The substrate bending test is a test for confirming the likelihood of cracking in the multilayer body. Each sample was mounted on a substrate using solder. Next, a metal push rod having a diameter of 1.0 mm was pressed against the surface of the substrate on which the multilayer ceramic capacitor was not mounted, such that the substrate was bent. A mechanical stress was applied to the substrate and the multilayer ceramic capacitor at a bending amount of the substrate of 3.0 mm and a holding time of 60 seconds. Next, it was checked whether or not cracks occurred in the multilayer body. For each of the Examples and the Comparative Example, 50 samples were tested. The numbers of samples in which cracks were observed for each of the Examples and the Comparative Examples are shown in Table 1.

### Moisture Resistance Test

The moisture resistance test is a test for confirming moisture resistance reliability. Each sample was mounted on a substrate using solder. Next, each sample was placed in a high-temperature and high-humidity bath having a temperature of 125°C and a relative humidity of 95% RH, and a test was performed under the conditions of a voltage of 4 V and a test period of time of 144 hours. Samples each having an insulation resistance value (IR value) decreased by two or more digits were evaluated as samples having deteriorated moisture resistance. For each of the Examples and the Comparative Example, 72 samples were tested. The numbers of samples having deteriorated moisture resistance in each of Examples and the Comparative Example are shown in Table 1.

### Quality Evaluation

The quality was evaluated for each of Examples and the Comparative Example. When the number of samples in which cracks occurred was 5 or less and the number of samples in which moisture resistance was degraded was 2 or less, the evaluation was determined to be "good".

When the number of samples in which cracks occurred was 20 or less and the number of samples in which moisture resistance was degraded was 10 or less, and when the evaluation did not correspond to "good", the evaluation was determined to be "fair".

When the number of samples in which cracks occurred was larger than 20 or the number of samples in which moisture resistance deteriorated was larger than 10, the evaluation was determined as "poor".

**[Table 1]**

| | W dimension of first region (µm) | W dimension of first base electrode layer of first external electrode (µm) | W dimension of second base electrode layer of first external electrode (µm) | substrate bending test (detective number/total number) | humidity resistance test (detective number/total number) | evaluation |
|---|---|---|---|---|---|---|
| Comparative Example 1 | - | 200 | 200 | 25/50 | 0/72 | poor |
| Example 1 | 100 (W dimension of multilayer body 1/5) | 200 | 200 | 13/50 | 0/72 | fair |
| Example 2 | 125 (W dimension of multilayer body 1/4) | 187.5 | 187.5 | 9/50 | 0/72 | fair |
| Example 3 | 167 (W dimension of multilayer body 1/3) | 166.5 | 166.5 | 4/50 | 0/72 | good |
| Example 4 | 250 (W dimension of multilayer body 1/2) | 125 | 125 | 3/50 | 0/72 | good |
| Example 5 | 477 | 11.5 | 11.5 | 3/50 | 1/72 | good |
| Example 6 | 480 | 10 | 10 | 1/50 | 1/72 | good |
| Example 7 | 482 | 9 | 9 | 1/50 | 3/72 | fair |
| Example 8 | 490 | 5 | 5 | 1/50 | 6/72 | fair |

### 3. Measurement Results

Table 1 shows the dimensions of the multilayer body W, the results of the substrate bending test, the results of the moisture resistance test, and the evaluation results for the Comparative Example and the Experimental Examples 1 to 8.

As shown in Table 1, when the multilayer body 2 was not provided with the first resin electrode layer 34A (in other words, when the first region 21 was not provided with the first region 21), the occurrence of cracks was confirmed in more than 10 samples in the substrate bending test (see Comparative Example 1). In addition, favorable results were obtained in the moisture resistance test.

When the W dimension of the first region was 100 µm or more (one fifth of the W dimension of the multilayer body W), the evaluation was determined as good or fair (see Examples 1 to 8).

Accordingly, it was confirmed that, with a configuration in which the multilayer body 2 is provided with the first resin electrode layer 34A, it was possible to reduce or prevent the occurrence of cracks. In addition, it was confirmed that, when the dimension of the first region 21 in the second direction W was one fifth or more of the dimension of the multilayer body 2 in the second direction W, it was possible to reduce or prevent the occurrence of cracks while ensuring the moisture resistance reliability.

Further, when the W dimension of the first region was 167 µm or more (one third of the W dimension of the multilayer body), the number of samples in which cracks occurred in the substrate bending test was 10 or less (see Examples 2 to 8).

As a result, it was confirmed that, when the dimension of the first region 21 in the second direction W was one third or more of the dimension of the multilayer body 2 in the second direction W, it was possible to reduce or prevent the occurrence of cracks more suitably while ensuring moisture resistance reliability.

When the W dimension of the first region was 480 µm or less (that is, when the W dimension of the first base electrode layer W of the first external electrode is 10 µm or more and the W dimension of the second base electrode layer of the first external electrode is 10 µm or more), the number of samples whose moisture resistance was degraded in the moisture resistance test was 2 or less (see Examples 1 to 6). On the other hand, when the W dimension of the first region was 482 µm (when the W dimension of the first base electrode layer of the first external electrode is 9 µm and the W dimension of the second base electrode layer of the first external electrode is 9 µm), the number of samples whose moisture resistance was degraded in the moisture resistance test was three (see Example 7).

Accordingly, it was confirmed that, when the dimension, in the second direction W, of the portion of the first base electrode layer 31A of the first external electrode provided on the first surface F1 is 10 µm or more and the dimension, and in the second direction, of the portion of the second base electrode layer 32A of the first external electrode provided on the first surface F1 is 10 µm or more, it was possible to suitably maintain the moisture resistance reliability.

The trend was appreciated in that, as the W dimension of the first region is larger (as the W dimension of the first base electrode layer of the first external electrode and the W dimension of the second base electrode layer of the first external electrode are smaller), the result of the substrate bending test was more favorable. On the other hand, the trend was appreciated in that, as the W dimension of the first region is smaller (as the W dimension of the first base electrode layer of the first external electrode and the W dimension of the second base electrode layer of the first external electrode are larger), the result of the moisture resistance test was more favorable.

When the W dimension of the first region was 480 µm (that is, when the W dimension of the first base electrode layer of the first external electrode was 10 µm and the W dimension of the second base electrode layer of the first external electrode was 10 µm), the number of defective samples in the substrate bending test and the number of defective samples in the moisture resistance test were one, respectively (see Example 6). When the W dimension of the first base electrode layer of the first external electrode was 10 µm and the dimension W of the second base electrode layer of the first external electrode was 10 µm, particularly favorable results were obtained in both the aspect of reducing or preventing the occurrence of cracks and the aspect of improving the moisture resistance reliability.

### Advantageous Effects of Embodiments

According to the present embodiment, it is possible to obtain the following advantageous effects.

The multilayer ceramic capacitor 1 includes: the multilayer body 2 including the inner layer portion 11 including the plurality of dielectric layers 14 and the plurality of internal electrodes 15 alternately laminated, the first surface F1 and the second surface F2 opposed to each other in the lamination direction T, the third surface F3 and the fourth surface F4 opposed to each other in the first direction L orthogonal or substantially orthogonal to the lamination direction T, and the fifth surface F5 and the sixth surface F6 opposed to each other in the second direction W orthogonal or substantially orthogonal to the lamination direction T and the first direction L; and the plurality of external electrodes 3 provided on an outer surface of the multilayer body 2. The plurality of internal electrodes 15 include at least one first internal electrode 15A which extends toward and is exposed at the fifth surface F5 and the sixth surface F6, and at least one second internal electrode 15B which is opposed to the first internal electrode 15A and extends toward and is exposed at the fifth surface F5. The plurality of external electrodes 3 includes the first external electrode 3A which is connected to the first internal electrode 15A and provided from the third surface F3 to the first surface F1, the fifth surface F5, and the sixth surface F6, the second external electrode 3B which is connected to the first internal electrode 15A and provided from the fourth surface F4 to the first surface F1, the fifth surface F5, and the sixth surface F6, and the third external electrode 3C which is connected to the second internal electrode 15B and provided from the fifth surface F5 to the first surface F1. The first external electrode 3A includes the first base electrode layer 31A of the first external electrode which is connected to the first internal electrode 15A and provided from the fifth surface F5 to the first surface F1, the second base electrode layer 32A of the first external electrode which is connected to the first internal electrode 15A and provided from the sixth surface F6 to the first surface F1, and the first resin electrode layer 34A provided over the first base electrode layer 31A of the first external electrode, the first surface F1, and the second base electrode layer 32A of the first external electrode; and the first plated layer 36A provided over the first resin electrode layer 34A. The first surface F1 includes the first region 21 which is a region between a region in which the first base electrode layer 31A of the first external electrode is provided and a region in which the second base electrode layer 32A of the first external electrode is provided, and which is a region in which the first resin electrode layer 34A is provided. The first region 21 overlaps, in the lamination direction T, with the middle portion of the multilayer body 2 in the second direction W.

In the three-terminal multilayer ceramic capacitor, cracks occurring in the vicinity of a portion where the tip portion of each of the external electrodes opposed to each other in the first direction L and the multilayer body are in contact with each other is likely to occur in the vicinity of a middle portion of the external electrode in the second direction W.

However, according to such a configuration, the first surface F1 includes the first region 21 which is a region between the region where the first base electrode layer 31A of the first external electrode is provided and the region where the second base electrode layer 32A of the first external electrode is provided, and which is a region where the first resin electrode layer 34A is provided. In such a case, the first base electrode layer of the first external electrode and the second base electrode layer of the first external electrode are not provided at a portion of the first region overlapping, in the lamination direction T, with the middle portion in the second direction W of the multilayer body. Therefore, it is possible to reduce or prevent the transmission of stress to the portion of the first surface F1 overlapping, in the lamination direction T, with the middle portion of the multilayer body in the second direction W via the first base electrode layer of the first external electrode and the second base electrode layer of the first external electrode.

Further, the first resin electrode layer is provided at a portion of the first region overlapping, in the lamination direction T, with the middle portion of the multilayer body in the second direction W. When a relatively large force acts on the first resin electrode layer 34A in a direction in which the first external electrode 3A and the multilayer body 2 are spaced from each other, the first resin electrode layer 34A breaks or peels off from the multilayer body, for example. In addition, the first resin electrode layer 34A functions as a buffer layer when a force acts on the first resin electrode layer 34A in a direction in which the first external electrode 3A and the multilayer body 2 approach each other. Therefore, it is possible to reduce or prevent the transmission of stress to the portion of the first surface F1 overlapping, in the lamination direction T, with the middle portion of the multilayer body in the second direction W.

As a result, since it is possible to reduce or prevent the transmission of stress to the portion of the multilayer body 2 where cracks are likely to occur, it is possible to provide the multilayer ceramic capacitor 1 that is able to reduce or prevent the occurrence of cracks in the multilayer body 2.

The dimension of the first region 21 in the second direction W is one third or more of the dimension of the multilayer body 2 in the second direction W.

According to such a configuration, since it is possible to sufficiently maintain the size of the first region 21, it is possible to more reliably reduce or prevent the occurrence of cracks.

The dimension in the second direction W of a portion of the first base electrode layer 31A of the first external electrode provided on the first surface F1 is 10 µm or more, and the dimension in the second direction W of a portion of the second base electrode layer 32A of the first external electrode provided on the first surface F1 is 10 µm or more.

When moisture enters the multilayer body 2, the function of the multilayer ceramic capacitor 1 may be impaired. It is considered that a portion of the surface of the multilayer body 2 where the internal electrodes 15 extend toward and are exposed is likely to be a path through which moisture enters the multilayer body 2. In addition, it is considered that the boundary portion between the tip portion of the first base electrode layer 31A of the first external electrode in the second direction W and the first surface F1 is a location where the moisture is likely to enter.

However, according to such a configuration, the boundary portion between the tip portion of the first base electrode layer 31A of the first external electrode in the second direction W and the first surface F1 can be sufficiently distanced from the portion of the fifth surface F5 where the internal electrodes 15 extend toward and are exposed. With such a configuration, since it is possible to reduce or prevent the moisture from reaching the portion of the fifth surface F5 where the internal electrodes 15 extend toward and are exposed, it is possible to reduce or prevent the moisture from entering the interior of the multilayer body 2.

The boundary portion between the tip portion of the second base electrode layer 32A of the first external electrode in the second direction W and the first surface F1 can be sufficiently distanced away from the portion of the sixth surface F6 where the internal electrodes 15 extend toward and are exposed. With such a configuration, since it is possible to reduce or prevent the moisture from reaching the portion of the sixth surface F6 where the internal electrodes 15 extend toward and are exposed, it is possible to reduce or prevent the moisture from entering the interior of the multilayer body 2. Therefore, it is possible to improve the moisture resistance reliability of the multilayer ceramic capacitor 1.

The distance D3 in the first direction L from a tip in the first direction L of the first base electrode layer 31A of the first external electrode to a peripheral edge of the first resin electrode layer 34A is 5 µm or more.

According to such a configuration, the first resin electrode layer 34A can be more reliably interposed between the tip portion in the first direction L of the first base electrode layer 31A of the first external electrode and the first plated layer 36A. Therefore, by the action of the first resin electrode layer 34A, it is possible to suitably reduce or prevent the transmission of stress from the first plated layer 36A to the tip portion in the first direction L of the first base electrode layer 31A of the first external electrode. With such a configuration, it is possible to suitably reduce or prevent the occurrence of cracks in the multilayer body 2.

The third external electrode 3C includes the third plated layer 38C, and the shortest distance D4 between the first plated layer 36A and the third plated layer 38C is 100 µm or more.

According to such a configuration, since the first plated layer 36A and the third plated layer 38C can be sufficiently distanced away from each other, it is possible to reduce or prevent the occurrence of a short circuit between the first external electrode 3A and the third external electrode 3C.

Although embodiments of the present invention have been described above, the present invention is not limited to the above-described embodiments, and various changes and modifications thereto can be made.

In the above embodiments, the multilayer ceramic capacitor 1 is substantially symmetrical in the lamination direction T. However, the multilayer ceramic capacitor 1 may not necessarily be substantially symmetrical in the lamination direction T. For example, the first external electrode 3A may not necessarily be provided on the second surface F2.

In the above embodiment, the multilayer ceramic capacitor 1 is substantially symmetrical in the first direction L. However, the multilayer ceramic capacitor 1 may not necessarily be symmetrical in the first direction L. In the above embodiment, the multilayer ceramic capacitor 1 is substantially symmetrical in the second direction W. However, the multilayer ceramic capacitor 1 may not necessarily be symmetrical in the second direction W. For example, the second external electrode 3B may not have a configuration corresponding to the first external electrode 3A.

In the above embodiments, each of the first internal electrodes 15A is substantially H-shaped as viewed in the lamination direction T. However, the shape of each of the first internal electrodes is not limited thereto. It suffices if each of the first internal electrodes is connected to the first external electrode 3A and the second external electrode 3B, respectively, and includes the extension portion exposed on the fifth surface and connected to the first external electrode 3A (the first base electrode layer 31A of the first external electrode), and the extension portion exposed on the sixth surface and connected to the first external electrode 3A (the second base electrode layer 32A of the first external electrode). For example, each of the first internal electrodes may include two extension portions each exposed on the fifth surface and one extension portion exposed on the sixth surface, one of the two extension portions exposed on the fifth surface and the extension portion exposed on the sixth surface may be connected to the first external electrode, and the other of the two extension portions exposed on the fifth surface may be connected to the second external electrode.

In the above-described embodiments, each of the second internal electrodes 15B has a substantially cross-shape as viewed in the lamination direction T. However, the shape of each of the second internal electrodes is not limited thereto. For example, a plurality of portions of each of the second internal electrodes may be exposed on the fifth surface, or a plurality of portions may be exposed on the sixth surface.

In the above embodiments, the multilayer ceramic capacitor 1 includes one third external electrode 3C and one fourth external electrode 3D. However, the present invention is not limited thereto. The multilayer ceramic capacitor may include a plurality of third external electrodes or a plurality of fourth external electrodes.

## Claims

1. A multilayer ceramic capacitor comprising:
a multilayer body including an inner layer portion including a plurality of dielectric layers and a plurality of internal electrodes alternately laminated, a first surface and a second surface opposed to each other in a lamination direction, a third surface and a fourth surface opposed to each other in a first direction orthogonal or substantially orthogonal to the lamination direction, and a fifth surface and a sixth surface opposed to each other in a second direction orthogonal or substantially orthogonal to the lamination direction and the first direction; and
a plurality of external electrodes provided on an outer surface of the multilayer body,
wherein
the plurality of internal electrodes include at least one first internal electrode which extends toward and is exposed at the fifth surface and the sixth surface, and at least one second internal electrode which is opposed to the first internal electrode and extends toward and is exposed at the fifth surface,
the plurality of external electrodes includes a first external electrode which is connected to the first internal electrode and provided from the third surface to the first surface, the fifth surface, and the sixth surface, a second external electrode which is connected to the first internal electrode and provided from the fourth surface to the first surface, the fifth surface, and the sixth surface, and a third external electrode which is connected to the second internal electrode and provided from the fifth surface to the first surface,
the first external electrode includes a first base electrode layer of the first external electrode which is connected to the first internal electrode and provided from the fifth surface to the first surface, a second base electrode layer of the first external electrode which is connected to the first internal electrode and provided from the sixth surface to the first surface, and a first resin electrode layer provided over the first base electrode layer of the first external electrode, the first surface, and the second base electrode layer of the first external electrode; and a first plated layer provided over the first resin electrode layer,
the first surface includes a first region which is a region between a region in which the first base electrode layer of the first external electrode is provided and a region in which the second base electrode layer of the first external electrode is provided, and which is a region in which the first resin electrode layer is provided, and
the first region overlaps, in the lamination direction, with a middle portion of the multilayer body in the second direction.

2. The multilayer ceramic capacitor according to claim 1, wherein a dimension of the first region in the second direction is one third or more of a dimension of the multilayer body in the second direction.

3. The multilayer ceramic capacitor according to claim 2, wherein a dimension in the second direction of a portion of the first base electrode layer of the first external electrode provided on the first surface is 10 µm or more, and
a dimension in the second direction of a portion of the second base electrode layer of the first external electrode provided on the first surface is 10 µm or more.

4. The multilayer ceramic capacitor according to any one of claims 1 to 3, wherein a distance in the first direction from a tip in the first direction of the first base electrode layer of the first external electrode to a peripheral edge of the first resin electrode layer is 5 µm or more.

5. The multilayer ceramic capacitor according to claim 4, wherein
the third external electrode includes a third plated layer, and
a shortest distance between the first plated layer and the third plated layer is 100 µm or more.
